# EUROPEAN PATENT SPECIFICATION

(11) **EP 3 771 321 B1**
(45) Date of publication and mention of the grant of the patent: **06.09.2023**
(21) Application number: 20184895.9
(22) Date of filing: 09.07.2020
(51) Int. Cl.: A01D 34/82, A01D 75/20

(54) **RIDING LAWN MOWER**
AUFSITZRASENMÄHER
TONDEUSE À GAZON AUTOPORTÉE

(30) Priority: 31.07.2019 JP 2019140689
(43) Date of publication of application: 03.02.2021
(73) Proprietor: Iseki & Co., Ltd., Matsuyama-shi, Ehime 799-2692 (JP)
(72) Inventor: KITAHARA, Yusuke, Iyo-gun, Ehime 791-2193 (JP)
(74) Representative: TBK

(56) References cited:
- EP-A1- 3 453 246
- JP-A- 2014 180 277
- JP-A- 2019 047 747

## Description

### TECHNICAL FIELD

The disclosure relates to a riding lawn mower according to the preamble of claim 1 equipped with a mower for performing a lawn mowing work, and more particularly, to a safety guard structure around a collector part mounted on a rear portion of a cockpit.

### BACKGROUND ART

There is known a mower in which a mower deck arranged on a front portion of a running vehicle body performs a lawn mowing work and a collector for collecting mowed grass is arranged at the rear of a cockpit, and in which a gate-shaped frame is provided between the cockpit and the collector and a protective net is stretched around the gate-shaped frame (see JP 2014- 180277 A).

JP 2019- 047747 A discloses a riding lawn mower having the features of the preamble of claim 1.

### SUMMARY OF THE INVENTION

Since the invention disclosed in JP 2014- 180277 A has a configuration in which the protective net is arranged between the cockpit and the front portion of the collector, it is possible to prevent accidental intrusion of a relatively large body portion such as a head and arms to the collector on the rear side and to prevent contact accidents in advance when the collector moves up and down.

However, it is not easy to fold the gate-shaped frame due to the configuration of the protective net, and it takes efforts to drive the mower under trees and store the mower in a barn or the like.

The disclosure has been made in view of the above situations, and an object thereof is to further develop a riding lawn mower according to the preamble of claim 1 such as to facilitate folding of a safety frame while including a protective net.

The disclosure has taken the following technical means in order to solve the above problems.

This object is achieved by a riding lawn mower having the features of claim 1. Advantageous further developments are defined in the dependent claims.

According to the invention disclosed in claim 1 or 2, the safety guard 15 surrounding the cockpit 9 is provided, and the net guard 21 is provided in a space between the left and right struts 15L, 15R of the safety guard 15. With this configuration, an operator's body is protected by the safety guard 15, and an operator is safe because the net guard 21 can prevent an operator's body form moving toward the collector 32. Further, since the net guard 21 can be pivoted, the head frame 15H of the safety guard 15 can be folded.

According to the invention disclosed in claim 3, the net guard 21 is locked in the posture (b) in which the head frame 15H can be pivoted. Therefore, in addition to the effect described in claim 1 or 2, the head frame 15H can be easily pivoted.

According to the invention disclosed in claim 4, the net guard 21 is locked in the standing posture (a) when the net frame 23 comes into contact with the second pivot locking portions 27d. Therefore, in addition to the effect described in claim 2 or 3, a work can be safely performed.

According to the invention disclosed in claim 5, in addition to the effect described in claim 4, the net guard 21 can be easily held.

### BRIEF DESCRIPTION OF THE DRAWINGS

Fig. 1 is a side view of a riding lawn mower;

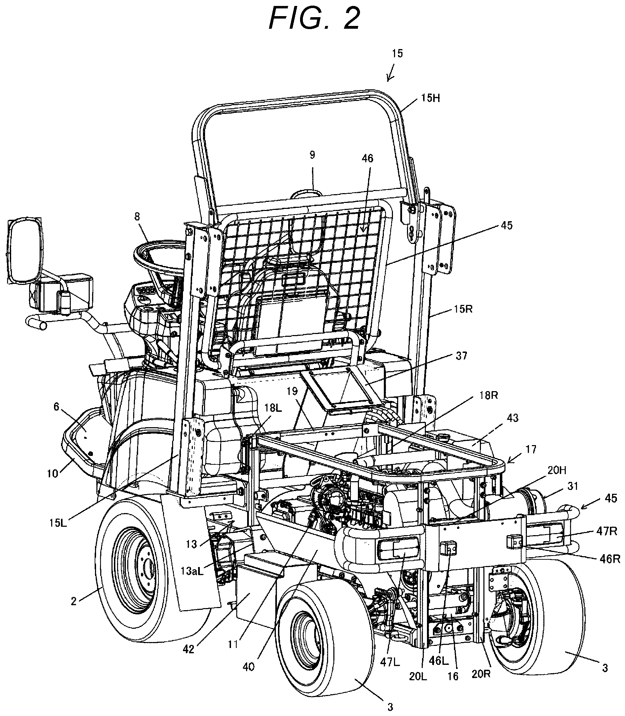

Fig. 2 is a rear perspective view of the riding lawn mower with a collector removed, as viewed diagonally from the left side;

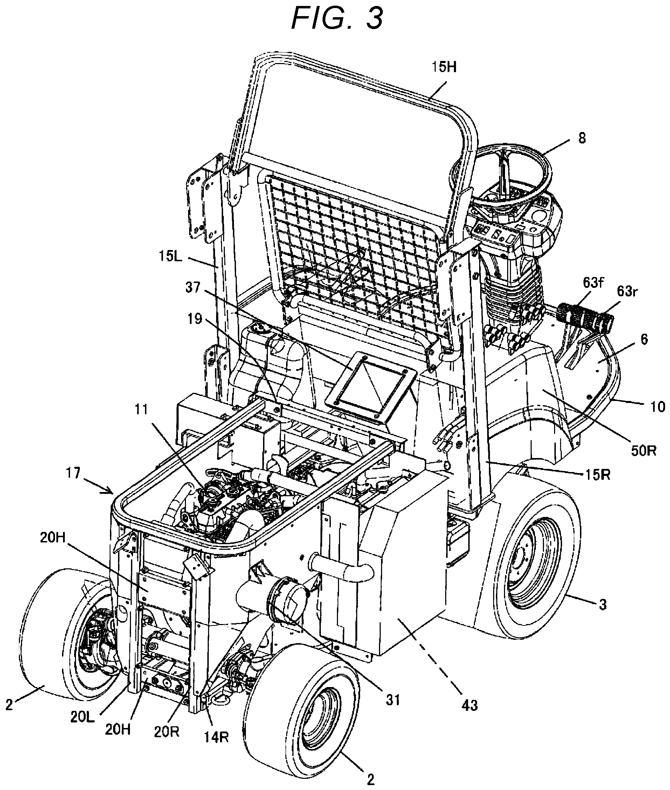

Fig. 3 is a rear perspective view of the riding lawn mower of Fig. 2 with a bumper removed, as viewed diagonally from the right side;

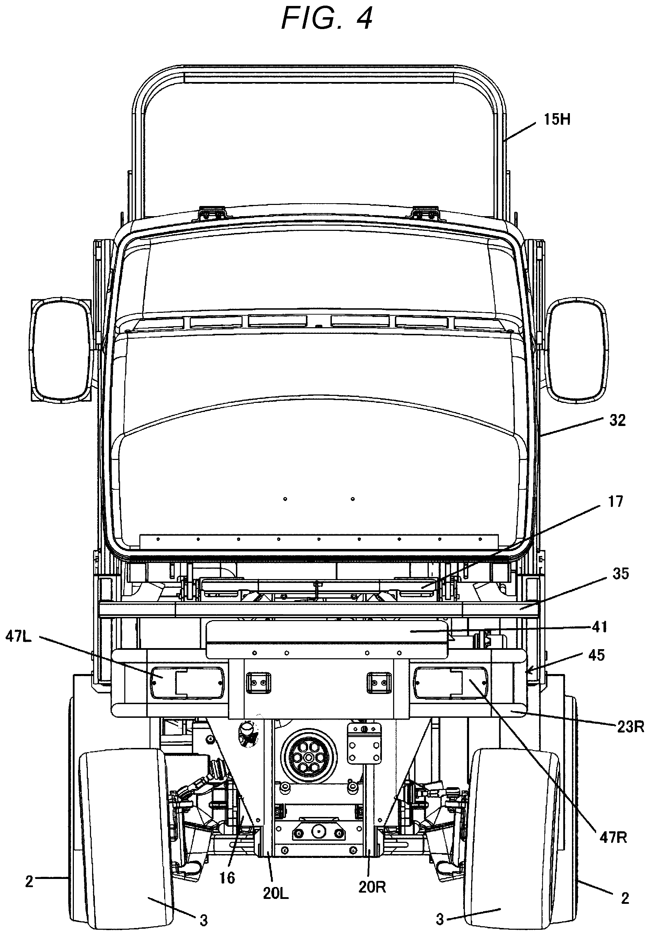

Fig. 4 is a rear view of the riding lawn mower;

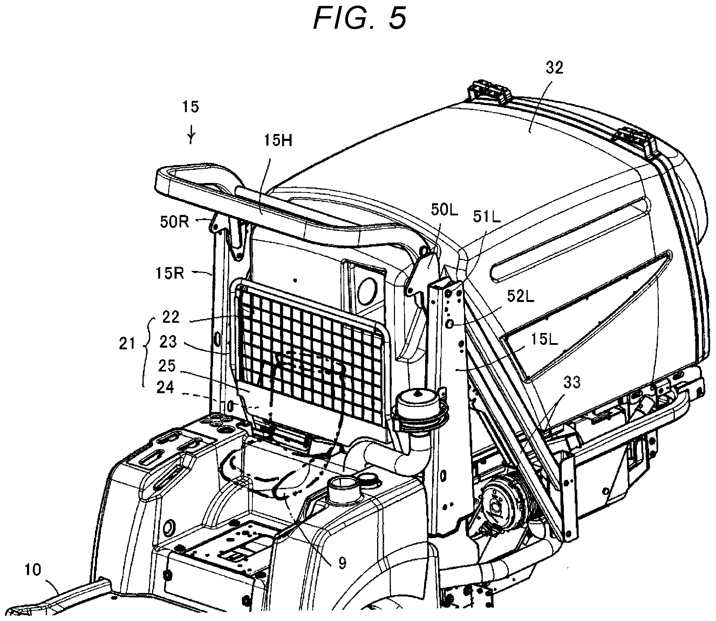

Fig. 5 is a perspective view of the riding lawn mower with a control part removed;

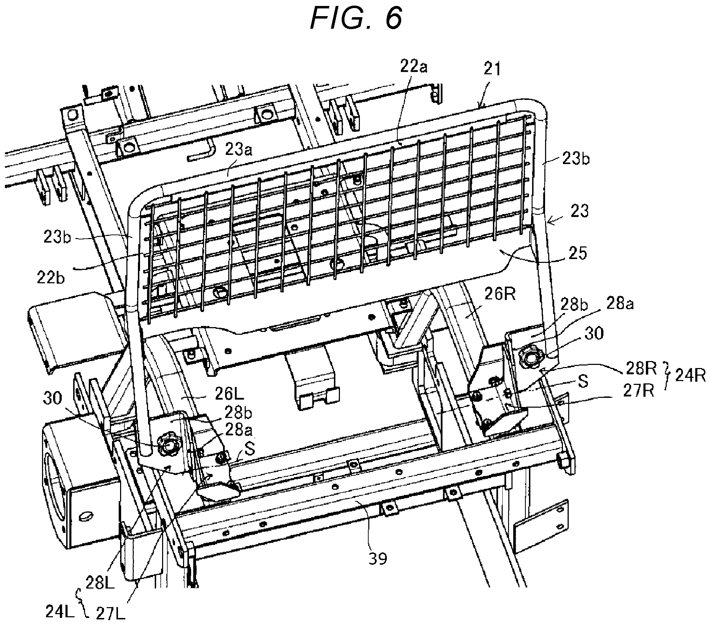

Fig. 6 is a perspective view of a net guard;
Fig. 7 is a perspective view of a support bracket;
Fig. 8A is a side view of the net guard in a standing posture, and Fig. 8B is a side view of the net guard in a backwardly tilted posture; and
Figs. 9A to 9E are views for explaining a pivoting operation of a head frame.

### DESCRIPTION OF EMBODIMENTS

Hereinafter, an embodiment of the disclosure will be described in detail with reference to the drawings.

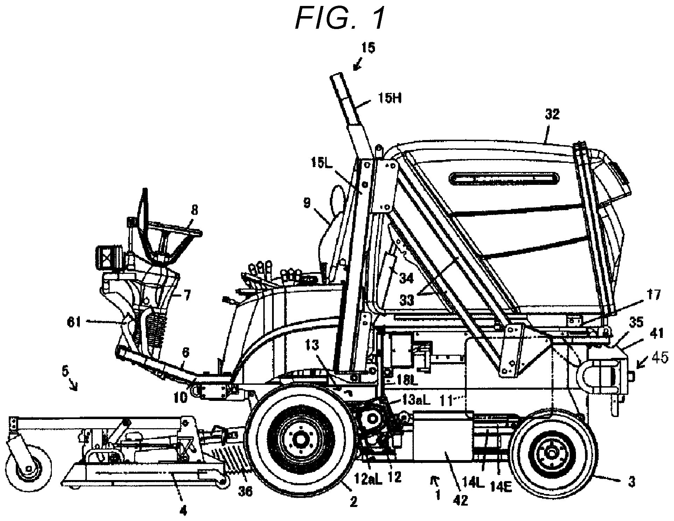

Fig. 1 shows a side view of a riding lawn mower of the present embodiment.

Front wheels 2, 2 and rear wheels 3, 3 are provided at the front and rear parts of a running vehicle body 1, respectively. A mower 5 having a cutting blade 4 for mowing grass or the like is provided below the front part of the vehicle body 1 and in front of the front wheels 2, 2, thereby forming a so-called front mower. A steering column 7 is erected on a floor 6 above the front portion of the vehicle body 1. A steering wheel 8 is provided on an upper portion of the steering column 7. Further, a cockpit 9 is provided behind the steering wheel 8.

The frame structure of the vehicle body 1 will be described in detail. The frame structure includes a floor frame 10 for supporting the floor 6, the cockpit 9, and the like from the front side, a transmission case 12 for accommodating a transmission system that receives power of an engine 11 and drives a running transmission (e.g., HST) and the mower 5, a safety guard frame 13 fixed to an upper portion of the transmission case 12, and a pair of left and right side frames 14L, 14R that are connected to a lower end of the transmission case 12 and support the engine 11 and the like. Reference numerals L, R refer to the left and right sides of the pair of left and right components, respectively. In the case of explaining the common configuration, the reference numerals L, R may be omitted.

The front side of the floor frame 10 is formed in a U shape in a plan view. The steering column 7 is supported on the front part of the floor frame 10, and the cockpit 9 and an operation box such as various levers are supported on the rear part of the floor frame 10. The left and right rear ends of the floor frame 10 are connected to left and right side surfaces 13L, 13R of the safety guard frame 13 in a superposed state. Left and right struts 15L, 15R of a safety guard 15 are connected to the left and right side surfaces 13L, 13R of the safety guard frame 13. Upper ends of the left and right struts 15L, 15R are connected by a head frame 15H. L-shaped case connecting portions 13aL, 13aR are provided on the left and right sides of the lower portion of the safety guard frame 13. Each of the case connecting portions 13aL, 13aR is fixedly connected to an upper surface and a rear surface of the transmission case 12, thereby obtaining a strong rigid body structure.

The transmission case 12 forms a part of a frame structure of the vehicle body 1 as described above. Running transmission cases 12aL, 12aR, which are equipped with endless belts for transmission to the front wheels 2, 2 and gears, are transmittably attached to left and right ends of the transmission case 12, respectively.

The left and right side frames 14L, 14R are connected and fixed to a lower portion of the transmission case 12. The side frames 14L, 14R extend rearward. Engine mounting swash plates 14E, 14E are formed in the middle of the side frames 14L, 14R in the front and rear direction, and the engine 11 can be supported in a vibration-proof manner. Then, a rear axle case 16 is provided above the rear ends of the side frames 14L, 14R. A rear wheel differential mechanism, left and right axles, a reduction gear mechanism, and the like are installed inside the rear axle case 16. Rear ends of the side frames 14L, 14R are connected and fixed by left and right connecting members 14S.

An upper frame 17 is formed at a position slightly higher than the height of the engine 11. The upper frame 17 is formed in a U shape in a plan view. The upper frame 17 has a curved portion on the rear side, and left and right front end portions of the upper frame 17 are connected to adjacent frames. Specifically, the upper end portions are connected and fixed to a horizontal frame 19. The horizontal frame 19 connects a pair of left and right vertical frames 18L, 18R, the lower ends of which are fixed to the safety guard frame 13 and which are erected vertically.

Subsequently, the configuration of the rear part of the frame structure of the vehicle body 1 will be described. Two vertical struts 20L, 20R also serving as reinforcements are provided between the rear ends of the left and right side frames 14L, 14R and the upper frame 17. An appropriate number of horizontal bars 20H, 20H are fixedly provided between the upper and lower sides of the vertical struts 20L, 20R to provide reinforcement in the form of a ladder.

Subsequently, the safety guard 15 provided on the safety guard frame 13 has a so-called ROPS configuration, and a net guard 21 is formed in a space between the left and right struts 15L, 15R. The net guard 21 includes a protection net 22, a net frame 23 for stretching and holding the protection net 22, and support portions 24L, 24R for supporting the net frame 23 on the side of the vehicle body 1. The net frame 23 is made of U-shaped pipe material and holds the protection net 22 on an upper side 23a and left and right sides 23b, 23b. Specifically, four peripheral surfaces of the protection net 22 in a grid shape are supported by rail-shaped holding fittings 22a, 22b, 22b. Among these, the holding fitting 22a on the upper side and the holding fittings 22b, 22b on the left and right sides are appropriately fixed to the net frame 23. The material of the protection net 22 may be a thin metal wire or an elastic string. With the presence of the protection net 22, a body part such as a head and arms can be protected, so that it is possible to prevent intrusion of the body part into a collector 32 (described later) and a lifting range. Further, rear view can be ensured when the collector 32 is in a raised position.

The protection net 22 has a constant vertical height and serves as a first protection portion. A sheet metal protection plate 25 is provided as a second protection portion below the protection net 22. The sheet metal protection plate 25 is continuously provided on the lower side of the protection net 22. The sheet metal protection plate 25 blocks an opposing portion of a duct 37 (to be described later) and a receiving hole of the collector 32 from the cockpit 9. In the case of the protection net 22, there is a risk of accidents that a finger may pass through the protection net 22 by accident and be caught between the duct 37 and the receiving hole of the collector 32. However, when the sheet metal protection plate 25 is used as the second protection portion, such accidents can be prevented in advance.

The configuration of the support portions 24L, 24R of the net frame 23 is as follows. That is, operation part frames 26L, 26R are provided along operation parts arranged on the left and right of the cockpit 9 on the rear side of the floor frame 10, and the support portions 24L, 24R are formed at rear end portions of the operation part frames 26L, 26R.

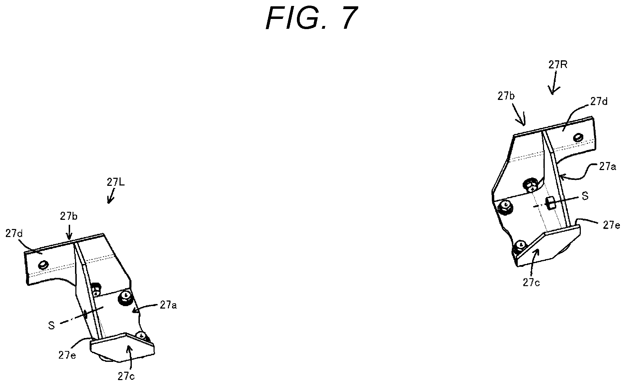

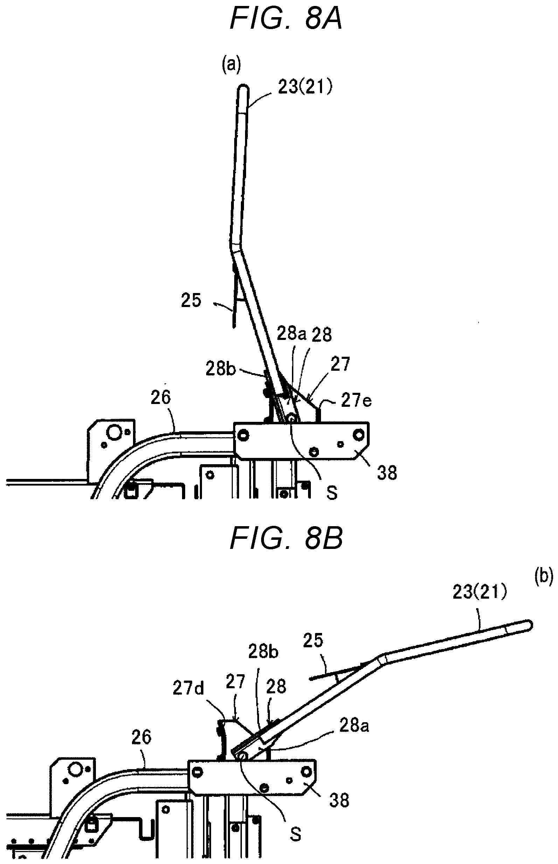

Specifically, in Figs. 7 and 8, support brackets 27L, 27R are formed at the rear ends of the operation part frames 26L, 26R. The support brackets 27L, 27R are formed by integrating a main body piece 27a having a pivot shaft insertion hole, a front side piece 27b having a mounting surface to a operation part frame 26, and a rear side piece 27c by bolt connection. On the other hand, connecting boards 28L, 28Rbent to have an L-shaped cross section are fixed to left and right lower end portions of the net frame 23. Then, the net frame 23 can be pivoted around a common fulcrum S by left and right support pins 29L, 29R by pivotably connecting the main body piece 27a of the support bracket 27 and a lateral piece 28a of the connecting board 28 via a support pin 29. That is, together with the protection net 22 (the first protection portion) and the sheet metal protection plate 25 (the second protection portion), the net frame 23 can change its posture between a standing posture (a) in which a front side piece 28b of the connecting board 28 comes into contact with an extension 27d (second pivot locking portion) of the front side piece 27b of the support bracket 27 and a backwardly tilted posture (b) in which the net frame 23 is pivoted rearward around the common fulcrum S and the lateral piece 28a of the connecting board 28 comes into contact with an extension 27e (first pivot locking portion) of the rear side piece 27c of the support bracket 27. In the standing posture (a), the net frame 23 can be connected and fixed by a knob bolt 30 while being in contact with the second pivot locking portion 27d. When the connection and fixation are released, the net frame 23 can be switched to the backwardly tilted posture (b). In the backwardly tilted posture (b) in which the net frame 23 is in contact with the first pivot locking portion 27e, the net frame 23 can maintain its posture by the weight of the support bracket 27 and the like. Left and right connecting plates 38L, 38R are horizontally connected to rear end portions of the operation part frames 26L, 26R. The left and right connecting plates 38L, 38R are connected by a rectangular tube frame 39 to form a rigid body. The left and right connecting plates 38L, 38R are connected to the intermediate portions of the left and right struts 15L, 15R of the safety guard 15.

A rear bumper 45 is provided on the horizontal bar 20H arranged at a position slightly higher than the center of the vertical struts 20L, 20R in the upper and lower direction. The rear bumper 45 has a thick central sheet metal material at the center and a pipe guard fixed in an extended state in the left and right direction. With the presence of the central sheet metal material and the pipe guard which are the components of the rear bumper 45, the vehicle body 1 itself receives the impact and has the effect of preventing or reducing damage even when the rear part of the vehicle body 1 collides with another object. In particular, a cushion rubber 46 is provided on the rear portion of the central sheet metal material so as to protrude rearward. Therefore, for example, when the vehicle body 1 runs rearward, the cushion rubber 46 first collides with another object and absorbs the impact, so that the impact on the vehicle body 1 can be alleviated.

Further, lamp mounting holes are formed at positions facing the rear surface. Combination lamps 47L, 47R, which are a combination of complex lights such as a side light, a brake light, and a turn signal, are inserted and fixed in the lamp mounting holes.

As shown in Fig. 1, the collector 32 for accommodating the mowed grass is provided behind the safety guard 15 and above the upper frame 17 via a lifting mechanism. The lifting mechanism includes a parallel link lifting arm 33 and a lifting cylinder mechanism 34. One end of the lifting mechanism is connected to the safety guard frames 13L, 13R for supporting the safety guard 15, and the other end is connected to a collector frame 35 on which the collector 32 can be placed. The grass mowed by the mower 5 is accommodated in the collector 32 via a bellows hose 36 and the duct 37 by the blowing action of a blower (not shown) . The duct 37 faces the receiving hole 32i of the collector 32. When the collector 32 descends, an outlet of the duct 37 and the receiving hole 321 of the collector 32 are aligned so as not to interfere with the raising and lowering operation of the collector 32. When the collector 32 is raised, the duct 37 can be easily separated from the receiving hole 321 of the collector 32.

An engine cover 40 covering the side surface of the engine 11 is arranged on the side surface of the vehicle body 1. A rear cover 41 is provided on the rear side of the vehicle body 1 so as to cover the vicinity of the upper portion of the central sheet metal material of the rear bumper 45. With the presence of the rear cover 41, the mowed grass dropped downward from the collector 32 can slide down along the surface of the rear cover 41 and can be dropped to the rear of the vehicle body 1. A battery case 42 for accommodating a battery is arranged on the left side surface of the vehicle body 1, and a radiator 43 is arranged on the right side surface of the vehicle body 1. Subsequently, the folding structure of the safety guard 15 will be described. As described above, the upper ends of the left and right struts 15L, 15R are connected by the head frame 15H. Brackets 50L, 50R are connected to the left and right lower ends of the head frame 15H. The brackets 50L, 50R are pivotably connected to the upper ends of the left and right struts 15L, 15R by pivot pins 51L, 51R having a common rotation axis. Furthermore, fixing pins 52L, 52R are removably provided. The fixing pins 52L, 52R can simultaneously penetrate the brackets 50L, 50R and the left and right struts 15L, 15R, and can maintain, together with the pivot pins 51L, 51R, the head frame 15H in the standing posture. Therefore, the safety of a worker can be ensured during normal work.

Since the height of the head frame 15H is high, the head frame 15H may be folded when entering a barn, for example. That is, the head frame 15H can be pivoted rearward around the pivot pins 51L, 51R and folded downward by removing the fixing pins 52L, 52R.

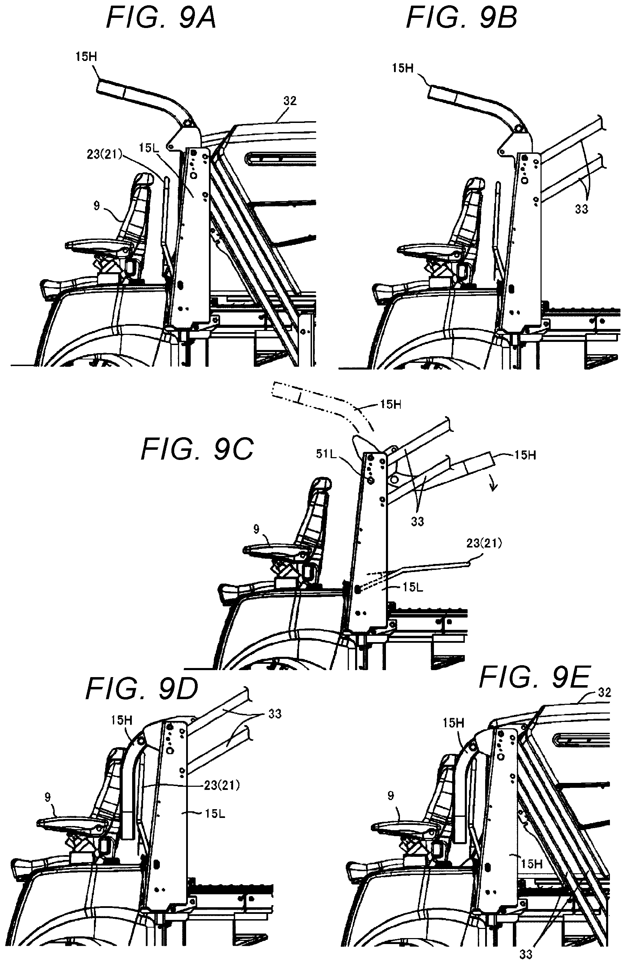

First, the collector 32 (Fig. 9A) in the working position that interferes with the pivoting is positioned on the upper side by pivoting the lifting arm 33 upward (Fig. 9B). Subsequently, the net guard 21 including the protection net 22, the net frame 23, and the support portions 24L, 24R is tilted rearward, and the head frame 15H is pivoted rearward (Fig. 9C) . After the downward pivoting of the head frame 15H is completed, the net guard 21 returns to the standing posture (Fig. 9D), and the collector 32 is lowered and returns to the working position (Fig. 9E). Since the head frame 15H is configured to pivot rearward in this manner, it is not necessary to remove the cockpit 9 on the front side from the outside of the pivot range, which is efficient.
- 1: Vehicle body
- 2: Front wheel
- 4: Cutting blade
- 5: Mower
- 9: Cockpit
- 15: Safety guard
- 15L: Left strut
- 15R: Right strut

- 15H: Head frame
- 21: Net guard
- 22: Protection net
- 23: Net frame
- 24L: Support portion
- 24R: Support portion
- 27d: Second pivot locking portion
- 27e: First pivot locking portion
- 30: Knob bolt
- 32: Collector
- S: Common fulcrum (fulcrum)
- (a): Standing posture
- (b): Backwardly tilted posture

## Claims

1. A riding lawn mower comprising:
a mower (5) for mowing grass provided below the front part of a running vehicle body (1) and in front of front wheels (2, 2) and comprising a cutting blade (4);
a collector (32) provided at the rear part of the vehicle body (1) and configured to accommodate mowed grass; and
a cockpit (9) provided on the front side of the vehicle body (1),
wherein a safety guard (15) surrounding the cockpit (9) is provided between the cockpit (9) and the collector (32), and wherein
a net guard (21) is provided in a space between left and right struts (15L, 15R) of the safety guard (15),
**characterized in that**
the net guard (21) is pivotably provided in a posture that does not hinder the folding pivot of a head frame (15H) of the safety guard (15).

2. The riding lawn mower according to claim 1,
wherein the net guard (21) comprises a protection net (22), a net frame (23) for holding the protection net (22), and support portions (24L, 24R) for supporting the net frame (23) on the side of the vehicle body (1), and the net frame (23) is provided pivotably around fulcrums (S) of the support portions (24L, 24R).

3. The riding lawn mower according to claim 2,
wherein the support portions (24L, 24R) have first pivot locking portions (27e), and the net guard (21) is locked in a posture (b) in which the head frame (15H) can be pivoted when the net frame (23) comes into contact with the first pivot locking portions (27e).

4. The riding lawn mower according to claim 2 or 3,
wherein the support portions (24L, 24R) have second pivot locking portions (27d), and the net guard (21) is locked in a standing posture (a) when the net frame (23) comes into contact with the second pivot locking portions (27d).

5. The riding lawn mower according to claim 4, comprising a knob bolt (30) for fixing the net frame (23) in the standing posture (a) in which the net frame (23) comes into contact with the second pivot locking portions (27d).

## Patentansprüche

1. Aufsitzrasenmäher, der aufweist:
einen Mäher (5) zum Mähen von Gras, der unterhalb des Frontteils eines Fahrfahrzeugkörpers (1) und vor Vorderrädern (2, 2) vorgesehen ist und ein Schneidmesser (4) aufweist;
einen Auffangbehälter (32), der an dem Heckteil des Fahrzeugkörpers (1) vorgesehen und so gestaltet ist, dass er gemähtes Gras aufnimmt; und
ein Fahrerplatz (9), der an der Frontseite des Fahrzeugkörpers (1) vorgesehen ist,
wobei zwischen dem Fahrerplatz (9) und dem Auffangbehälter (32) eine den Fahrerplatz (9) umgebende Schutzeinrichtung (15) vorgesehen ist, und wobei
in einem Raum zwischen einer linken und einer rechten Strebe (15L, 15R) der Schutzeinrichtung (15) ein Netzschutz (21) vorgesehen ist, und
**dadurch gekennzeichnet, dass**
der Netzschutz (21) schwenkbar in einer Stellung vorgesehen ist, die den Klappschwenk eines Kopfrahmens (15H) der Schutzeinrichtung (15) nicht behindert.

2. Aufsitzrasenmäher nach Anspruch 1,
wobei der Netzschutz (21) ein Schutznetz (22), einen Netzrahmen (23) zur Aufnahme des Schutznetzes (22) und Stützabschnitte (24L, 24R) zum Stützen des Netzrahmens (23) an der Seite des Fahrzeugkörpers (1) aufweist, und der Netzrahmen (23) schwenkbar um Drehpunkte (S) der Stützabschnitte (24L, 24R) vorgesehen ist.

3. Aufsitzrasenmäher nach Anspruch 2,
wobei die Stützabschnitte (24L, 24R) erste Schwenkverriegelungsabschnitte (27e) haben und der Netzschutz (21) in einer Stellung (b) verriegelt ist, in der der Kopfrahmen (15H) geschwenkt werden kann, wenn der Netzrahmen (23) in Berührung mit den ersten Schwenkverriegelungsabschnitten (27e) kommt.

4. Aufsitzrasenmäher nach Anspruch 2 oder 3,
wobei die Stützabschnitte (24L, 24R) zweite Schwenkverriegelungsabschnitte (27d) haben und der Netzschutz (21) in einer aufrechten Stellung (a) verriegelt ist, wenn der Netzrahmen (23) in Berührung mit den zweiten Schwenkverriegelungsabschnitten (27d) kommt.

5. Aufsitzrasenmäher nach Anspruch 4, der eine Griffschraube (30) zum Fixieren des Netzrahmens (23) in der aufrechten Stellung (a) aufweist, in der der Netzrahmen (23) in Berührung mit den zweiten Schwenkverriegelungsabschnitten (27d) kommt.

## Revendications

1. Tondeuse à gazon autoportée comprenant :
une tondeuse (5) pour tondre l'herbe placée sous la partie avant d'un corps de véhicule en fonctionnement (1) et devant des roues avant (2, 2) et comprenant une lame de coupe (4) ;
un dispositif de collecte (32) placé sur la partie arrière du corps de véhicule (1) et conçu pour recevoir l'herbe tondue ; et
un poste de pilotage (9) placé sur le côté avant du corps de véhicule (1),
dans laquelle un dispositif de sécurité (15) entourant le poste de pilotage (9) est placé entre le poste de pilotage (9) et le dispositif de collecte (32), et dans laquelle
un filet de sécurité (21) est placé dans un espace entre des montants gauche et droit (15L, 15R) du dispositif de sécurité (15),
**caractérisée en ce que**
le filet de sécurité (21) est placé pivotant dans une position qui n'entrave pas le pivot de pliage d'un cadre de tête (15H) du dispositif de sécurité (15).

2. Tondeuse à gazon autoportée selon la revendication 1,
dans laquelle le filet de sécurité (21) comprend un filet de protection (22), un cadre de filet (23) destiné à retenir le filet de protection (22), et des parties de support (24L, 24R) destinées à supporter le cadre de filet (23) sur le côté du corps de véhicule (1), et le cadre de filet (23) est placé pivotant autour de points d'appui (S) des parties de support (24L, 24R).

3. Tondeuse à gazon autoportée selon la revendication 2,
dans laquelle les parties de support (24L, 24R) comportent des premières parties de verrouillage de pivot (27e), et le filet de sécurité (21) est verrouillé dans une position (b) dans laquelle le cadre de tête (15H) peut être pivoté lorsque le cadre de filet (23) entre en contact avec les premières parties de verrouillage de pivot (27e).

4. Tondeuse à gazon autoportée selon la revendication 2 ou 3,
dans laquelle les parties de support (24L, 24R) comportent des secondes parties de verrouillage de pivot (27d), et le filet de sécurité (21) est verrouillé dans une position verticale (a) lorsque le cadre de filet (23) entre en contact avec les secondes parties de verrouillage de pivot (27d).

5. Tondeuse à gazon autoportée selon la revendication 4, comprenant un boulon (30) destiné à fixer le cadre de filet (23) dans la position verticale (a) dans laquelle le cadre de filet (23) entre en contact avec les secondes parties de verrouillage de pivot (27d).
